# EUROPÄISCHE PATENTSCHRIFT

(11) **EP 3 973 613 B1**
(45) Veröffentlichungstag und Bekanntmachung des Hinweises auf die Patenterteilung: **24.01.2024**
(21) Anmeldenummer: 20723098.8
(22) Anmeldetag: 29.04.2020
(51) Int. Cl.: H02K 1/14

(54) **STATOR EINER ELEKTRISCHEN MASCHINE**
STATOR OF AN ELECTRIC MACHINE
STATOR D'UNE MACHINE ÉLECTRIQUE

(30) Priorität: 22.05.2019 DE 102019207471
(43) Veröffentlichungstag der Anmeldung: 30.03.2022
(73) Patentinhaber: Robert Bosch GmbH, 70442 Stuttgart (DE)
(72) Erfinder: THEISINGER, Peter, 71706 Markgroeningen (DE)
(86) Internationale Anmeldenummer: PCT/EP2020/061890
(87) Internationale Veröffentlichungsnummer: WO 2020/233959

(56) Entgegenhaltungen:
- WO-A1-2018/020631
- JP-A- 2005 304 166
- JP-A- 2013 223 281
- JP-A- 2016 034 192
- JP-A- 2016 129 450
- US-A1- 2017 373 550
- US-B1- 6 864 611

## Beschreibung

### Stand der Technik

Die vorliegende Erfindung betrifft einen Stator einer elektrischen Maschine. Außerdem betrifft die Erfindung eine elektrische Maschine umfassend einen derartigen Stator.

Aus dem Stand der Technik sind unterschiedliche Statoren für elektrische Maschinen bekannt. Dabei weist der Stator üblicherweise eine Vielzahl von Statorzähnen auf, wobei an Enden der Statorzähne Zahnköpfe angeordnet sind.

Die Zahnköpfe können unterschiedliche Ausprägungen aufweisen. Bspw. offenbaren die in DE 10 2008 026 756 B4, die US 6,288,471 A, die US 6,984,909 A, sowie die in US 2006/038458 A1 jeweils unterschiedliche Ausgestaltungen von Zahnköpfen.

Aus den Dokumenten JP2016034192 A, WO2018/020631 A1, US6864611 B1, JP2013223281 A, JP2005304166 A, JP2016129450 A und US2017373550 A1 sind Statoren mit trapezförmigen und/oder asymmetrischen Zahnköpfen bekannt.

### Offenbarung der Erfindung

Erfindungsgemäß ist vorgesehen, dass der Stator einer elektrischen Maschine trapezförmige Zahnköpfe, die asymmetrisch angeordnet sind, aufweist. Durch die Trapezform werden Stromwärmeverluste in demjenigen elektrischen Leiter einer Wicklung des Stators, der an dem Zahnkopf anliegt, reduziert. Gleichzeitig werden Verluste durch magnetischen Streufluss zwischen den Zahnköpfen reduziert. Durch die Asymmetrie des Zahnkopfs ist außerdem erreicht, dass begünstigte Eigenschaften bezüglich einer Nutisolation mit überlappendem Isolationspapier geschaffen ist, wodurch eine effektive Zahnkopfbreite sinkt und somit der Streufluss verringert wird, während eine Leistung der elektrischen Maschine mit dem Stator vergrößert ist. Außerdem kann eine akustisch wirksame geringe tangentiale Zahnkopfbreite erreicht werden. Dadurch ist das akustische Verhalten, insbesondere bezüglich Tonalität und Schallleistungspegel, optimiert sowie eine Drehmomentwelligkeit verringert.

Der Stator einer elektrischen Maschine weist ein Statorjoch auf, der sich ringförmig um eine Statorachse erstreckt. Außerdem weist der Stator sich radial vom Statorjoch und entlang einer jeweiligen Zahnachse erstreckende Statorzähne auf, wobei jeder Statorzahn mit einem ersten Ende an dem Statorjoch angeordnet ist. Außerdem ist an einem dem ersten Ende gegenüberliegenden zweiten Ende ein Zahnkopf ausgebildet. Insbesondere entspricht das erste Ende einem proximalen Ende des Statorzahns, wobei das zweite Ende einem distalen Ende des Statorzahns entspricht. Statorzahn, Statorjoch und Zahnkopf sind vorteilhafterweise allesamt aus demselben Material gefertigt, insbesondere einstückig. Weiterhin ist bevorzugt vorgesehen, dass Statorjoch, Statorzähne und Zahnköpfe aus einem magnetisch leitfähigen Material gefertigt sind. Der Zahnkopf weist insbesondere zwei Zahnkopfüberstände auf, die jeweils quer zur Zahnachse gegenüber dem übrigen Statorzahn unter Bildung einer Zahnkopfstufe auskragen. Es ist vorgesehen, dass der Zahnkopf der Statorzähne trapezförmig, insbesondere mit einem trapezförmigen Querschnitt, ausgebildet ist. Dieser Querschnitt liegt insbesondere in einer Ebene senkrecht zur Statorachse. Außerdem ist vorgesehen, dass jeder Zahnkopf bezüglich der jeweiligen Zahnachse asymmetrisch ausgebildet ist. Auf diese Weise lassen sich die zuvor beschriebenen Vorteile erreichen. Eine asymmetrische Anordnung liegt insbesondere dann vor, wenn Zahnkopfüberstände in Tangentialrichtung oder bezüglich der Statorachse in Umfangsrichtung bezüglich der Außenflächen des Statorzahns unterschiedlich sind.

Die Unteransprüche haben bevorzugte Weiterbildungen der Erfindung zum Inhalt.

Die beiden Zahnkopfüberstände desselben Zahnkopfes sind bevorzugt unterschiedlich lang ausgebildet. Dabei sind die unterschiedlichen Längen der beiden Zahnkopfüberstände insbesondere in derselben Ebene senkrecht zur Zahnachse, insbesondere an der Stufe des Zahnkopfes, gemessen.

Es ist vorgesehen, dass die in Trapezform der jeweiligen Zahnköpfe eine der Zahnkopfstufe zugewandte Basis, eine der Zahnkopfstufe abgewandte Grundseite sowie einen ersten Schenkel und einen zweiten Schenkel aufweist.

Der erste Schenkel und der zweite Schenkel erstrecken sich jeweils zwischen Basis und Grundseite. Die beiden Schenkel nehmen besonders vorteilhaft betragsmäßig unterschiedliche Winkel zu der Basis ein. Außerdem ist vorgesehen, dass die Basis länger ist als die Grundseite. Die Basis und die Grundseite sind parallel zueinander orientiert, wobei der erste Schenkel und der zweite Schenkel bevorzugt nicht parallel zueinander verlaufen. Somit ist eine Trapezform vorhanden. Es ist weiterhin vorgesehen, dass die Basis an dem zweiten Ende des Statorzahns anliegt. Aufgrund einer derartigen Orientierung der Trapezform lassen sich die zuvor beschriebenen Eigenschaften und Vorteile in besonders vorteilhafter Weise erreichen.

Ein erster Zahnkopfüberstand, der dem Teilbereich der Basis zwischen erstem Schenkel und Statorzahn entspricht, ist größer als ein zweiter Zahnkopfüberstand, der dem Teilbereich der Basis zwischen Statorzahn und zweitem Schenkel entspricht. Auf diese Weise ist die Trapezform asymmetrisch gegenüber dem Statorzahn angeordnet. Eine solche Asymmetrie und unterschiedliche Zahnkopfüberstände haben einen Vorteil hinsichtlich der effektiven Zahnbreite, der aufgrund der unterschiedlichen Zahnkopfüberstände und der daraus resultierenden Asymmetrie verringert ist.

Der erste Zahnkopfüberstand und/oder der zweite Zahnkopfüberstand entsprechen bevorzugt dem 0,05-Fachen bis 0,4-Fachen einer Statorzahnbreite am zweiten Ende des Statorzahns. Die Statorzahnbreite entspricht somit dem Bereich der Basis, der zwischen dem ersten Zahnkopfüberstand und dem zweiten Zahnkopfüberstand liegt. Durch das beschriebene Verhältnis von erstem Zahnkopfüberstand und/oder zweitem Zahnkopfüberstand zu der Statorzahnbreite lässt sich die zuvor beschriebene Asymmetrie in besonders vorteilhafter Weise erreichen.

Der zweite Zahnkopfüberstand beträgt dem 0,4-Fachen bis 0,85-Fachen des ersten Zahnkopfüberstands. Dadurch ist eine optimale Asymmetrie der Trapezform relativ zu dem Statorzahn erreicht.

Eine Zahnkopfbreite des Statorzahns entspricht bevorzugt dem 0,6-Fachen bis 0,95-Fachen einer Abmessung der Basis. Die Abmessung der Basis ist besonders vorteilhaft die Summe aus erstem Zahnkopfüberstand, zweitem Zahnkopfüberstand und Statorzahnbreite am zweiten Ende des Statorzahns. Auf diese Weise ist die Größe des Zahnkopfs optimiert.

Eine Fußbreite des Statorzahns am ersten Ende entspricht bevorzugt dem 1,15-Fachen bis 1,5-Fachen einer Zahnhöhe. Die Zahnhöhe entspricht dem Abstand zwischen erstem Ende und Grundseite der Trapezform. Somit handelt es sich um die gesamte Höhe von Statorzahn und Zahnkopf, das heißt, die gesamte Höhe desjenigen Elements, das sich von dem Statorjoch ausgehend radial erstreckt.

Eine Zahnkopfhöhe des Zahnkopfs entspricht vorteilhafterweise dem 0,06-Fachen bis 0,18-Fachen einer Zahnhöhe. Die Zahnhöhe ist dabei dieselbe Zahnhöhe wie zuvor beschrieben. Durch ein derartiges Verhältnis kann wiederum die Größe des Zahnkopfs optimal erreicht werden.

In einer besonders vorteilhaften Ausgestaltung ist vorgesehen, dass der Stator eine Vielzahl von gestapelten Blechlamellen aufweist. An jeder Blechlamelle sind das Statorjoch, die Statorzähne und die Zahnköpfe einstückig ausgebildet. Somit ist der Stator einfach und kostengünstig herzustellen. Eine Montage erfolgt analog zu bekannten Statoren, die aus einer Vielzahl von Blechlamellen hergestellt sind. Die Blechlamellen sind vorteilhafterweise aus Elektroblech gefertigt.

Die Erfindung betrifft schließlich eine elektrische Maschine. Die elektrische Maschine weist einen Stator auf, der zuvor beschrieben wurde. Außerdem weist die elektrische Maschine einen Rotor auf, wobei der Stator eine Statorwicklung aufweist, die zu Antreiben des Rotors ausgebildet ist. Die Statorwicklung ist besonders vorteilhaft aus zumindest einem elektrischen Leiter mit rechteckförmigem Querschnitt gebildet. Die spezielle Form und Ausgestaltung der Statorzähne wie zuvor beschrieben, wirkt sich besonders vorteilhaft dann aus, wenn die elektrischen Leiter der Wicklung einen rechteckförmigen Querschnitt aufweisen.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Abbildung einer elektrischen Maschine gemäß einem Ausführungsbeispiel der Erfindung, und
- Figur 2: eine schematische Abbildung eines Teilbereichs eines Stators der elektrischen Maschine gemäß dem Ausführungsbeispiel der Erfindung.

### Ausführungsform der Erfindung

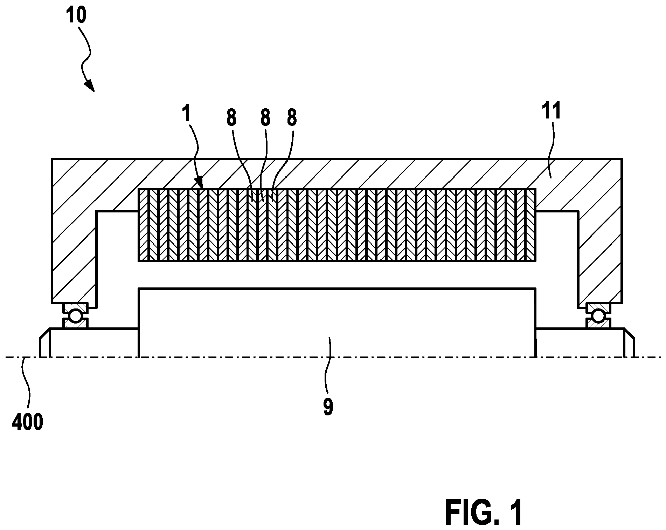

Figur 1 zeigt schematisch eine elektrische Maschine 10 gemäß einem Ausführungsbeispiel der Erfindung. Die elektrische Maschine 10 weist einen Stator 1 sowie eine Rotor 9 auf. Dabei erstreckt sich der Stator 1 um eine Statorachse 400. Der Stator 1 ist dabei bevorzugt aus einer Vielzahl von Blechlamellen 8 gebildet, die zu dem Stator 1 gestapelt sind. Außerdem ist der Stator 1 an einem Gehäuse 11 der elektrischen Maschine 10 aufgenommen.

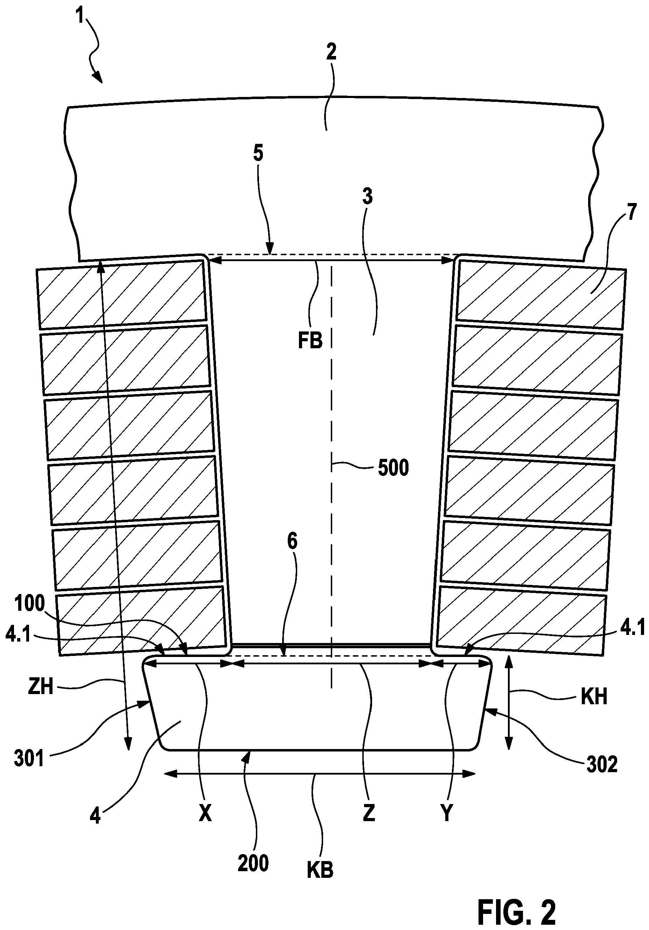

Figur 2 zeigt schematisch einen Ausschnitt des Stators 1 der elektrischen Maschine 10 gemäß dem Ausführungsbeispiel der Erfindung. Dabei ist insbesondere ersichtlich, dass der Stator 2 für eine Statorwicklung 7 vorgesehen ist, deren elektrische Leiter einen rechteckigen Querschnitt aufweisen.

Der Stator 1 umfasst ein Statorjoch 2, das ringförmig um die Statorachse 400 ausgebildet ist. Von der radialen Innenseite des Statorjochs erstrecken sich eine Vielzahl von Statorzähnen 3, wobei die Statorzähne 3 jeweils an einem ersten Ende 5 an dem Statorjoch 2 anliegen und sich jeweils entlang einer Zahnachse 500 erstrecken, beispielsweise in radialer Richtung bezüglich der Statorachse 400. An einem dem ersten Ende 5 gegenüberliegendem zweiten Ende 6 der Statorzähne 3 ist jeweils ein Zahnkopf 4 angeordnet. Dabei ist vorgesehen, dass an jeder Blechlamelle 8 das Statorjoch 2, die einzelnen Statorzähne 3 und die zugehörigen Zahnköpfe 4 einstückig ausgebildet sind. An dem Statorzahn 3 ist die Wicklung 7 angebracht. Der Statorzahn 3 schließt an seinem distalen Ende, das heißt an dem zweiten Ende 6, mit dem jeweiligen Zahnkopf 4 ab.

Der Zahnkopf 4 der Statorzähne 3 weist jeweils zwei Zahnkopfüberstände X, Y auf, die jeweils quer zur Zahnachse 500 gegenüber dem übrigen Statorzahn 3 unter Bildung einer Zahnkopfstufe 4.1 auskragen.

Erfindungsgemäß ist vorgesehen, dass der Zahnkopf 4 der Statorzähne jeweils trapezförmig und bezüglich der jeweiligen Zahnachse 500 asymmetrisch ausgebildet ist.

Die Trapezform des Zahnkopfs umfasst eine Basis 100, eine Grundseite 200 sowie einen ersten Schenkel 301 und einen zweiten Schenkel 302. Die Basis 100 und die Grundseite 200 sind parallel orientiert, wobei die Basis 100 länger ist als die Grundseite 200. Der erste Schenkel 301 und der zweite Schenkel 302 erstrecken sich jeweils zwischen Basis 100 und Grundseite 200, wobei der erste Schenkel 301 und der zweite Schenkel 302 zur Basis 100 betragsmäßig unterschiedliche Winkel einnehmen. Auf diese Weise ist bereits eine Asymmetrie des Zahnkopfs 4 erreicht.

Die Basis 100 ist an dem zweiten Ende 6 des Statorzahns 3 angeordnet. Außerdem wird eine Asymmetrie weiterhin dadurch erreicht, dass ein erster Zahnkopfüberstand X unterschiedlich von einem zweiten Zahnkopfüberstand Y ist. Der erste Zahnkopfüberstand X entspricht dem Teilbereich der Basis 100 zwischen erstem Schenkel 301 und Statorzahn 3. Der zweite Zahnkopfüberstand Y entspricht dem Teilbereich der Basis 100 zwischen Statorzahn 3 und zweitem Schenkel 302. Es ist vorgesehen, dass der erste Zahnkopfüberstand X größer ist als der zweite Zahnkopfüberstand Y, wobei der zweite Zahnkopfüberstand Y bevorzugt dem 0,4-Fachen bis 0,85-Fachen des ersten Zahnkopfüberstands X entspricht.

Durch die Trapezform des Zahnkopfs 4 ist erreicht, dass Stromwärmeverluste desjenigen elektrischen Leiters, der an dem Zahnkopf 4 anliegt, bedingt durch Stromverdrängung im Nutquerfeld reduziert ist. Gleichzeitig werden Verluste durch magnetischen Streufluss zwischen den Zahnköpfen 3 reduziert. Schließlich ist durch den unterschiedlichen ersten Zahnkopfüberstand X und zweiten Zahnkopfüberstand Y erreicht, dass begünstigende Eigenschaften bezüglich der Nutisolation mit überlappendem Isolationspapier geschaffen werden, wodurch die effektive Zahnkopfbreite sinkt und somit der Streufluss reduziert ist. Gleichzeitig ist eine Leistung bezüglich Geometrien mit identischem Zahnkopfüberstand erhöht.

Eine Zahnkopfbreite KB des Zahnkopfs 4 beträgt vorteilhafterweise das 0,6-Fache bis 0,95-Fache der Abmessung der Basis 100. Die Abmessung der Basis 100 ist bevorzugt die Summe aus erstem Zahnkopfüberstand X, zweitem Zahnkopfüberstand Y und einer Statorzahnbreite Z am zweiten Ende 6 des Statorzahns 3. Auf diese Weise ist insbesondere die akustisch wirksame tangentiale Zahnkopfbreite minimiert. Dadurch lässt sich das akustische Verhalten bezüglich Tonalität, Schallleistungspegel sowie Drehmomentwelligkeit begünstigen.

Besonders vorteilhaft ist außerdem vorgesehen, dass eine Fußbreite FB des Statorzahns 3 am ersten Ende 5 das 1,15-Fache bis 1,5-Fache einer Zahnhöhe ZH beträgt. Die Zahnhöhe ZH entspricht dem Abstand zwischen erstem Ende 5 und Grundseite 200. Außerdem ist vorgesehen, dass eine Zahnkopfhöhe KH des Zahnkopfs 4 das 0,06-Fache bis 0,18-Fache der Zahnhöhe ZH beträgt.

Durch die Ausgestaltung des Zahnkopfs 4 mit dem trapezförmigen Querschnitt sowie insbesondere in der Asymmetrie, ist der Stator 1 optimal für eine permanent erregte Synchronmaschine ausgelegt. Die elektrische Maschine 10 wie zuvor beschrieben ist somit besonders vorteilhaft eine Synchronmaschine. Diese ist insbesondere ausgebildet für den Einsatz in Hybridfahrzeugen und/oder Elektrofahrzeugen. Aufgrund der Ausgestaltung des Zahnkopfs 4 lässt sich für die elektrische Maschine 10 ein hohes Drehmoment sowie eine hohe Leistung erreichen. Außerdem werden gute akustische Eigenschaften erreicht, was sich in einem niedrigen Geräuschpegel der elektrischen Maschine 10 wiederspiegelt. Ebenso weist die elektrische Maschine 10 eine geringe Drehmomentwelligkeit auf. Verluste der elektrischen Maschine 10 sind dabei reduziert, was sich insbesondere durch reduzierte Kupferverluste durch Stromverdrängungseffekt wiederspiegelt. Die Herstellungskosten sowie Materialkosten der elektrischen Maschine 10, insbesondere des Stators 1, sind gering. Ein durch die Zahnköpfe 4 bedingter Streuflussverlust ist minimiert. Außerdem ist die Zahnkopfgeometrie der Zahnköpfe 4 bezüglich Nutisolation begünstigt.

## Patentansprüche

1. Stator (1) einer elektrischen Maschine (10), der ein sich ringförmig um eine Statorachse (400) erstreckendes Statorjoch (2) und in radialer Richtung bezüglich der Statorachse (400) vom Statorjoch (2) abstehende, jeweils sich entlang einer Zahnachse (500) erstreckende Statorzähne (3) aufweist, wobei jeder Statorzahn (3) mit einem ersten Ende (5) an dem Statorjoch (2) angeordnet ist und an einem dem ersten Ende (5) gegenüberliegenden zweiten Ende (6) ein Zahnkopf (4) ausgebildet ist, der jeweils zwei Zahnkopfüberstände (X, Y) aufweist, die jeweils quer zur Zahnachse (500) gegenüber dem übrigen Statorzahn (3) unter Bildung einer Zahnkopfstufe (4.1) auskragen, wobei der Zahnkopf (4) der Statorzähne (3) jeweils trapezförmig und bezüglich der jeweiligen Zahnachse (500) asymmetrisch ausgebildet ist, wobei die Trapezform des Zahnkopfs (4) eine der Zahnkopfstufe (4.1) zugewandte Basis (100), eine der Zahnkopfstufe (4.1) abgewandte Grundseite (200), sowie einen ersten Schenkel (301) und einen zweiten Schenkel (302) aufweist, wobei sich der erste Schenkel (301) und der zweite Schenkel (302) jeweils zwischen Basis (100) und Grundseite (200) erstrecken, und insbesondere betragsmäßig unterschiedliche Winkel zu der Basis (100) einnehmen, wobei die Basis (100) länger ist als die Grundseite (200), wobei die Basis (100) und die Grundseite (200) parallel zueinander verlaufen, wobei der erste Schenkel (301) und der zweite Schenkel (302) bevorzugt nichtparallel verlaufen, und wobei die Basis (100) an dem zweiten Ende (6) des Statorzahns (3) anliegt, wobei ein erster Zahnkopfüberstand (X), der dem Teilbereich der Basis (100) zwischen erstem Schenkel (301) und Statorzahn (3) entspricht, größer ist als ein zweiter Zahnkopfüberstand (Y), der dem Teilbereich der Basis (100) zwischen Statorzahn (3) und zweitem Schenkel (302) entspricht, und dass der zweite Zahnkopfüberstand (Y) das 0,4-Fache bis 0,85-Fache des ersten Zahnkopfüberstands (X) beträgt.

2. Stator (1) nach Anspruch 1, **dadurch gekennzeichnet, dass** die beiden Zahnkopfüberstände (X, Y) desselben Zahnkopfes (4) unterschiedlich lang ausgebildet sind, wobei die unterschiedlichen Längen der beiden Zahnkopfüberstände (X,Y) in derselben Ebene senkrecht zur Zahnachse (500), insbesondere an der Zahnkopfstufe (4.1), gemessen sind.

3. Stator (1) nach Anspruch 1, **dadurch gekennzeichnet, dass** der erste Zahnkopfüberstand (X) und/oder der zweite Zahnkopfüberstand (Y) dem 0,05-Fachen bis 0,4-Fachen einer Statorzahnbreite (Z) am zweiten Ende (6) des Statorzahns (3) entspricht.

4. Stator (1) nach einem der Ansprüche 1 bis 3, **dadurch gekennzeichnet, dass** eine Zahnkopfbreite (KB) des Zahnkopfs (4) das 0,6-Fache bis 0,95-Fache der Abmessung der Basis (100) beträgt, wobei die Abmessung der Basis (100) bevorzugt der Summe aus erstem Zahnkopfüberstand (X), zweitem Zahnkopfüberstand (Y) und Statorzahnbreite (Z) am zweiten Ende (6) des Statorzahns (3) entspricht.

5. Stator (1) nach einem der Ansprüche 1 bis 4, **dadurch gekennzeichnet, dass** eine Fußbreite (FB) des Statorzahns (3) am ersten Ende (5) das 1,15-Fache bis 1,5-Fache einer Zahnhöhe (ZH) beträgt, wobei die Zahnhöhe (ZH) dem Abstand zwischen erstem Ende (5) und Grundseite (200) entspricht.

6. Stator (1) nach einem der Ansprüche 1 bis 5, **dadurch gekennzeichnet, dass** eine Zahnkopfhöhe (KH) des Zahnkopfs (4) das 0,06-Fache bis 0,18-Fache einer Zahnhöhe (ZH) beträgt, wobei die Zahnhöhe (ZH) dem Abstand zwischen erstem Ende (5) und Grundseite (200) entspricht.

7. Stator (1) nach einem der vorhergehenden Ansprüche, **gekennzeichnet durch** eine Vielzahl von gestapelten Blechlamellen (8), wobei an jeder Blechlamelle (8) das Statorjoch (2), die Statorzähne (3) und die Zahnköpfe (4) einstückig ausgebildet sind.

8. Elektrische Maschine (10) aufweisend einen Stator (1) nach einem der vorhergehenden Ansprüche und einen Rotor (9), wobei der Stator (1) eine Statorwicklung (7) aufweist, die zum Antreiben des Rotors (9) ausgebildet ist, und wobei die Statorwicklung (7) bevorzugt aus zumindest einem elektrischen Leiter mit rechteckförmigen Querschnitt gebildet ist.

## Claims

1. Stator (1) of an electric machine (10), which stator has a stator yoke (2) that extends annularly around a stator axis (400) and has stator teeth (3) that each extend along a tooth axis and protrude from the stator yoke (2) in the radial direction with respect to the stator axis (400), wherein a first end (5) of each stator tooth (3) is arranged on the stator yoke (2) and a tooth head (4) is formed on a second end (6) opposite the first end (5), each tooth head having two tooth-head projections (X, Y), each of which projects transversely to the tooth axis (500) in relation to the remaining stator tooth (3) so as to form a tooth-head step (4.1), wherein each tooth head (4) of the stator teeth (3) is trapezoidal and is formed asymmetrically with respect to the respective tooth axis (500), wherein the trapezoidal shape of the tooth head (4) has a base (100) facing the tooth-head step (4.1), a bottom side (200) facing away from the tooth-head step (4.1), and also a first limb (301) and a second limb (302), wherein the first limb (301) and the second limb (302) each extend between the base (100) and the bottom side (200), and in particular form different angles with the base (100), wherein the base (100) is longer than the bottom side (200), wherein the base (100) and the bottom side (200) run parallel to each other, wherein the first limb (301) and the second limb (302) preferably do not run in parallel, and wherein the base (100) rests against the second end (6) of the stator tooth (3), wherein a first tooth-head projection (X), which corresponds to the subregion of the base (100) between the first limb (301) and the stator tooth (3), is greater than a second tooth-head projection (Y), which corresponds to the subregion of the base (100) between the stator tooth (3) and the second limb (302), and wherein the second tooth-head projection (Y) is 0.4 times to 0.85 times the first tooth-head projection (X).

2. Stator (1) according to Claim 1, **characterized in that** the two tooth-head projections (X, Y) of the same tooth head (4) are of different lengths, wherein the different lengths of the two tooth-head projections (X, Y) are measured in the same plane perpendicularly to the tooth axis (500), in particular at the tooth-head step (4.1) .

3. Stator (1) according to Claim 1, **characterized in that** the first tooth-head projection (X) and/or the second tooth-head projection (Y) correspond/corresponds to 0.05 times to 0.4 times a stator-tooth width (Z) at the second end (6) of the stator tooth (3).

4. Stator (1) according to any of Claims 1 to 3, **characterized in that** a tooth-head width (KB) of the tooth head (4) is 0.6 times to 0.95 times the dimensions of the base (100), wherein the dimensions of the base (100) preferably correspond to the sum of the first tooth-head projection (X), the second tooth-head projection (Y) and the stator-tooth width (Z) at the second end (6) of the stator tooth (3).

5. Stator (1) according to any of Claims 1 to 4, **characterized in that** a root width (FB) of the stator tooth (3) at the first end (5) is 1.15 times to 1.5 times a tooth height (ZH), wherein the tooth height (ZH) corresponds to the distance between the first end (5) and the bottom side (200).

6. Stator (1) according to any of Claims 1 to 5, **characterized in that** a tooth-head height (KH) of the tooth head (4) is 0.06 times to 0.18 times a tooth height (ZH), wherein the tooth height (ZH) corresponds to the distance between the first end (5) and the bottom side (200) .

7. Stator (1) according to any of the preceding claims, **characterized by** a large number of stacked sheet-metal laminations (8), wherein the stator yoke (2), the stator teeth (3) and the tooth heads (4) are integrally formed on each sheet-metal lamination (8).

8. Electric machine (10) having a stator (1) according to any of the preceding claims and a rotor (9), wherein the stator (1) has a stator winding (7), which is designed to drive the rotor (9), and wherein the stator winding (7) is preferably formed from at least one electrical conductor with a rectangular cross section.

## Revendications

1. axe de stator (400) et des dents de stator (3) dépassant de la culasse de stator (2) dans la direction radiale par rapport à l'axe de stator (400) et s'étendant chacune le long d'un axe de dent (500), chaque dent de stator (3) étant agencée avec une première extrémité (5) sur la culasse de stator (2) et une tête de dent (4) étant formée sur une deuxième extrémité (6) opposée à la première extrémité (5), laquelle tête de dent présente respectivement deux saillies de tête de dent (X, Y), lesquelles font saillie respectivement transversalement à l'axe de dent (500) par rapport au reste de la dent de stator (3) en formant un gradin de tête de dent (4.1), la tête de dent (4) des dents de stator (3) étant chacune de forme trapézoïdale et asymétrique par rapport à l'axe de dent (500) respectif, la forme trapézoïdale de la tête de dent (4) présentant une base (100) tournée vers le gradin de tête de dent (4.1), un côté de base (5) tourné vers le gradin de tête de dent (4.1), ainsi qu'une première branche (301) et une deuxième branche (302), la première branche (301) et la deuxième branche (302) s'étendant chacune entre la base (100) et le côté de base (200), et, en particulier, font des angles différents en valeur absolue par rapport à la base (100), la base (100) étant plus longue que le côté de base (200), la base (100) et le côté de base (200) s'étendant parallèlement l'un à l'autre, la première branche (301) et la deuxième branche (302) s'étendant de préférence de manière non parallèle, et la base (100) étant en contact avec la deuxième extrémité (6) de la dent de stator (3), un premier dépassement (X) de tête de dent, qui correspond à la zone partielle de la base (100) entre la première branche (301) et la dent de stator (3), étant supérieur à un deuxième dépassement de tête de dent (Y) qui correspond à la zone partielle de la base (100) entre la dent de stator (3) et la deuxième branche (302), et en ce que le deuxième dépassement de tête de dent (Y) est de 0,4 fois à 0,85 fois le premier dépassement de tête de dent (X).

2. les deux saillies de tête de dent (X, Y) de la même tête de dent (4) sont de longueurs différentes, les longueurs différentes des deux saillies de tête de dent (X, Y) étant mesurées dans le même plan perpendiculaire à l'axe de dent (500), en particulier au niveau du gradin de tête de dent (4.1).

3. dépassement de tête de dent (X) et/ou le deuxième dépassement de tête de dent (Y) correspond à 0,05 fois à 0,4 fois une largeur de dent de stator (Z) à la deuxième extrémité (6) de la dent de stator (3).

4. Stator (1) selon l'une des revendications 1 à 3, **caractérisé en ce qu'**une largeur de tête de dent (KB) de la tête de dent (4) est égale à 0,6 fois à 0,95 fois la dimension de la base (100), la dimension de la base (100) correspondant de préférence à la somme de la première saillie de tête de dent (X), de la deuxième saillie de tête de dent (Y) et de la largeur de dent de stator (Z) à la deuxième extrémité (6) de la dent de stator (3).

5. Stator (1) selon l'une des revendications 1 à 4, **caractérisé en ce qu'**une largeur de pied (FB) de la dent de stator (3) à la première extrémité (5) est de 1,15 fois à 1,5 fois une hauteur de dent (ZH), la hauteur de dent (ZH) correspondant à la distance entre la première extrémité (5) et le côté de base (200).

6. Stator (1) selon l'une des revendications 1 à 5, **caractérisé en ce qu'**une hauteur de tête de dent (KH) de la tête de dent (4) est de 0,06 fois à 0,18 fois une hauteur de dent (ZH), la hauteur de dent (ZH) correspondant à la distance entre la première extrémité (5) et le côté de base (200).

7. Stator (1) selon l'une des revendications précédentes, **caractérisé par** une pluralité de lamelles de tôle (8) empilées, la culasse de stator (2), les dents de stator (3) et les têtes de dents (4) étant formées en une seule pièce sur chaque lamelle de tôle (8).

8. Machine électrique (10) comprenant un stator (1) selon l'une des revendications précédentes et un rotor (9), le stator (1) présentant un enroulement statorique (7) qui est conçu de façon à entraîner le rotor (9), et l'enroulement statorique (7) étant de préférence formé d'au moins un conducteur électrique de section transversale rectangulaire.
